(19) **Europäisches Patentamt**
**European Patent Office**
**Office européen des brevets**

(11) **EP 3 183 823 B1**

(12) **EUROPEAN PATENT SPECIFICATION**

(45) Date of publication and mention
of the grant of the patent:
**04.07.2018 Bulletin 2018/27**

(21) Application number: **14758105.2**

(22) Date of filing: **18.08.2014**

(51) Int Cl.:
**H04B 7/06** *(2006.01)*  **H04J 13/00** *(2011.01)*

(86) International application number:
**PCT/EP2014/067572**

(87) International publication number:
**WO 2016/026512 (25.02.2016 Gazette 2016/08)**

(54) **KRONECKER APPROXIMATION AND SCALAR QUANTIZATION OF TRANSMIT WEIGHT VECTORS**

KRONECKER APPROXIMATION UND SKALARQUANTIZIERUNG VON GESENDENTEN GEWICHTSVEKTOREN

APPROXIMATION DE KRONECKER ET QUANTIFICATION DES VECTEURS DE PONDÉRATION TRANSMIS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**28.06.2017 Bulletin 2017/26**

(73) Proprietor: **Nokia Solutions and Networks Oy 02610 Espoo (FI)**

(72) Inventors:
• **MONDAL, Bishwarup**
  **Beavercreek, Ohio 45430 (US)**
• **VISOTSKY, Eugene**
  **Buffalo Grove, IL 60089 (US)**
• **VOOK, Frederick**
  **Schaumburg, IL 60194 (US)**

(74) Representative: **Nokia EPO representatives Nokia Technologies Oy Karaportti 3 02610 Espoo (FI)**

(56) References cited:
**US-A1- 2011 085 610     US-A1- 2011 274 188**
**US-A1- 2013 259 151     US-A1- 2014 029 684**

• **SAGNIK GHOSH ET AL: "Techniques for MIMO Channel Covariance Matrix Quantization", IEEE TRANSACTIONS ON SIGNAL PROCESSING, IEEE SERVICE CENTER, NEW YORK, NY, US, vol. 60, no. 6, 1 June 2012 (2012-06-01), pages 3340-3345, XP011444047, ISSN: 1053-587X, DOI: 10.1109/TSP.2012.2190727**

## Description

BACKGROUND:

**Field:**

Communication systems may benefit from various techniques for the efficient communication of channel characteristics. For example, wireless communication systems may benefit from the use of large scale antenna arrays with high-order spatial multiplexing.

**Description of the Related Art:**

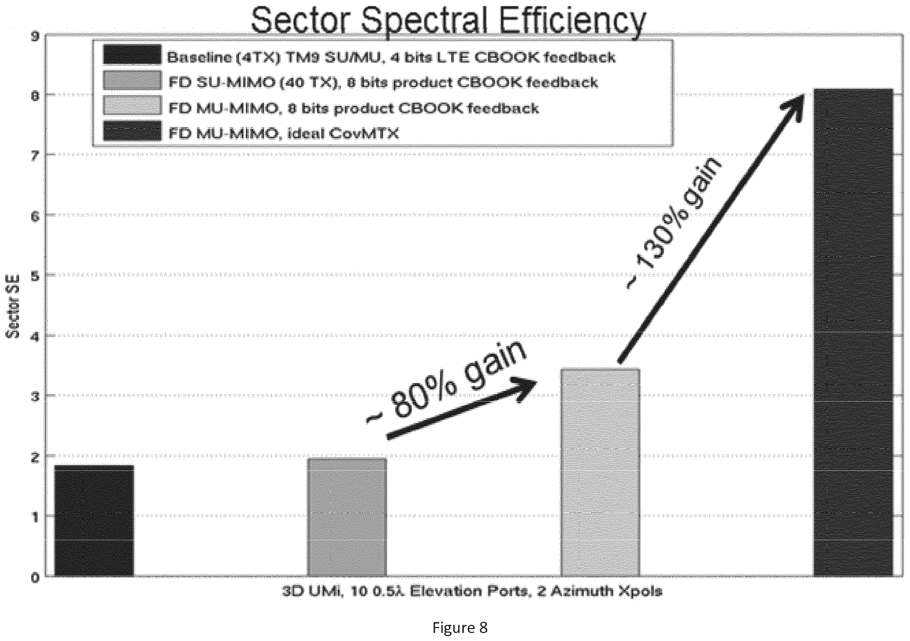

Full dimension multiple-input multiple-output (FD-MIMO) may be implemented using a large number of antenna ports, such as 16 - 64 antenna ports. In order to exploit such large arrays multi-user multiple-input multiple-output (MU-MIMO) may be a common transmission mechanism. Figure 8 illustrates sector spectral efficiency of various implementations. Figure 8 illustrates a study with 40 ports compared to a baseline of 4 ports. This and other studies show that most of the gains may come from MU-MIMO when employing such a system. In the study shown in Figure 8, the product codebook concept was compared against the azimuth-only baseline and a system that has ideal knowledge of the covariance matrix.

One of the challenges in providing good quality MU-MIMO performance is the apparent need for very accurate channel state information, more accurate than what is necessary for single user multiple-input multiple-output (SU-MIMO). Currently the LTE codebooks vary in size from 4bits to 8bits depending on the number of ports. Meanwhile, the fidelity of channel state information (CSI) feedback in LTE lies between 1-2 bits/port. Using this as a rough guide supporting 16-64 ports will lead to codebook sizes of the order of 16-128 bits. Such codebook sizes may be prohibitive in terms of search complexity. The fidelity of CSI feedback may also need to be increased beyond 2 bits/port, considering MU-MIMO transmission. US2014/029684 A1 discloses a method using codebooks for vector quantization of optimal horizontal direction and a scalar quantizer to quantize an optimal vertical direction from the eNodeB to a selected UE.

SUMMARY:

According to certain embodiments, a method can include approximating, using a Kronecker approximation, a transmit weight vector of a set of one or more transmit weight vectors for a channel of a first node via a least-squares approach to produce a reduced-dimension vector 1 and a reduced-dimension vector 2. The method can also include quantizing at least one of reduced dimension vector 1 and reduced-dimension vector 2 using scalar quantization to produce a quantized representation. The method can further include transmitting the quantized representation to a second node. In certain embodiments the set of transmit weight vectors can include a plurality of transmit weight vectors and in other embodiments the set of transmit weight vectors can include only a single transmit weight vector.

In certain embodiments, a method can include receiving a scalar quantized representation of one or more reduced-dimension vectors that comprises an approximation of a transmit weight vector using Kronecker approximation corresponding to a channel for a user equipment. The method can also include transmitting data using a Kronecker product approximation based on the scalar quantized representation.

A computer program product can, according to certain embodiments, encode instructions for performing a process. The process can include either of the preceding methods. Similarly, a non-transitory computer-readable medium can, in certain embodiments, be encoded with instructions that, when executed in hardware, perform a process. The process can include either of the preceding methods.

According to certain embodiments, an apparatus can include at least one processor and at least one memory including computer program code. The at least one memory and the computer program code can be configured to, with the at least one processor, cause the apparatus at least to approximate, using a Kronecker approximation, a transmit weight vector of a set of transmit weight vectors for a channel of a first node via a least-squares approach to produce a reduced-dimension vector 1 and a reduced-dimension vector 2. The at least one memory and the computer program code can also be configured to, with the at least one processor, cause the apparatus at least to quantize at least one of reduced dimension vector 1 and reduced-dimension vector 2 using scalar quantization to produce a quantized representation. The at least one memory and the computer program code can further be configured to, with the at least one processor, cause the apparatus at least to transmit the quantized representation to a second node.

In certain embodiments, an apparatus can include at least one processor and at least one memory including computer program code. The at least one memory and the computer program code can be configured to, with the at least one processor, cause the apparatus at least to receive a scalar quantized representation of one or more reduced-dimension vectors that comprises an approximation of a transmit weight vector using Kronecker approximation corresponding to a channel for a user equipment. The at least one memory and the computer program code can also be configured to, with the at least one processor, cause the apparatus at least to transmit data using a Kronecker product approximation based on the scalar quantized representation.

An apparatus, according to certain embodiments, can include means for approximating, using a Kronecker approximation, a transmit weight vector of a set of transmit weight vectors for a channel of a first node via a least-squares approach to produce a reduced-dimension vector 1 and a reduced-dimension vector 2. The apparatus can also include means for quantizing at least one of reduced dimension vector 1 and reduced-dimension vector 2 using scalar quantization to produce a quantized representation. The apparatus can further include means for transmitting the quantized representation to a second node.

An apparatus, in certain embodiments, can include means for receiving a scalar quantized representation of one or more reduced-dimension vectors that comprises an approximation of a transmit weight vector using Kronecker approximation corresponding to a channel for a user equipment. The apparatus can also include means for reconstructing the Kronecker product approximation for an eigen-mode at a base station.

BRIEF DESCRIPTION OF THE DRAWINGS:

For proper understanding of the invention, reference should be made to the accompanying drawings, wherein:

> Figure 1 illustrates a relationship between azimuth ports and number of columns in a rectangular 2D array for an azimuth polarized representation, according to certain embodiments.
> Figure 2 illustrates a relationship between elevation ports and number of rows in the rectangular array for an azimuth polarized representation, according to certain embodiments.
> Figure 3 illustrates a relationship between azimuth ports and number of columns in a rectangular 2D array for an elevation polarized representation, according to certain embodiments.
> Figure 4 illustrates a relationship between elevation ports and number of rows in the rectangular array for an elevation polarized representation, according to certain embodiments.
> Figure 5 plots the loss in rank-1 signal to noise ratio (SNR) assuming a maximal ratio combining (MRC) receiver for various quantization schemes.
> Figure 6 plots the loss in per-stream SNR for rank-2 assuming a minimum mean square error (MMSE) receiver for various quantization schemes.
> Figure 7 illustrates the system-level performance of a scheme according to certain embodiments.
> Figure 8 illustrates sector spectral efficiency of various implementations.
> Figure 9 illustrates a method according to certain embodiments.
> Figure 10 illustrates a system according to certain embodiments.

DETAILED DESCRIPTION:

Certain embodiments provide for systems, devices, and methods to quantize channel state information (CSI) targeting MU-MIMO for large arrays with reasonable complexity. Other implementations are also permitted.

In this discussion it is assumed that transmission ports, relevant to FD-MIMO transmission, are in the form of a rectangular array with cross-polar or co-polar antenna elements. Other arrangements are also possible.

In certain embodiments there is a two-step quantization method for the dominant eigenvectors of the channel. In the first step, a Kronecker approximation of one or more eigenvectors is made using a least-squares approach. This approach can significantly reduce the dimensionality of the vector. In the second step, the reduced-dimension vector is quantized using scalar quantization.

Thus, in certain embodiments a first step can involve determining a Kronecker structure transmit weight of dimension Mt x 1 for each dominant eigen-mode at the UE, where Mt = total number of antenna ports in the 2D array.

The method is described for the dominant eigen-mode, but can be applied more generally. In this discussion, v can denote the dominant eigenvector (Mt x 1) determined from a covariance matrix at the UE. Considering a cross-polarized uniform rectangular array, v can be represented in a matrix form in the following two ways. Each of the following two ways is a valid Kronecker-product representation even though the two ways can result in different overheads and can have differences in performance, as will be shown later.

A first representation is an azimuth polarized representation. In this representation, the azimuth ports comprising the Kronecker structure can be considered to be cross-polarized whereas the elevation ports comprising the Kronecker structure can be considered to have a behavior that is averaged across the +/-45° polarizations.

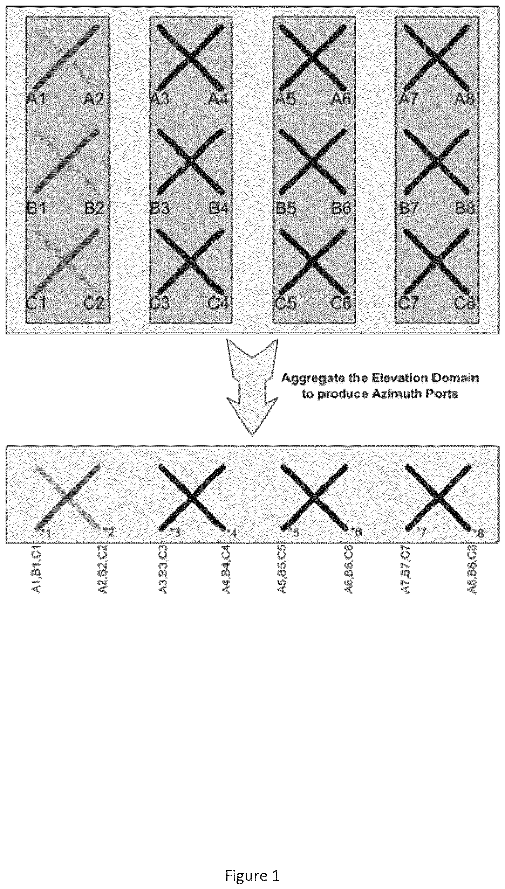

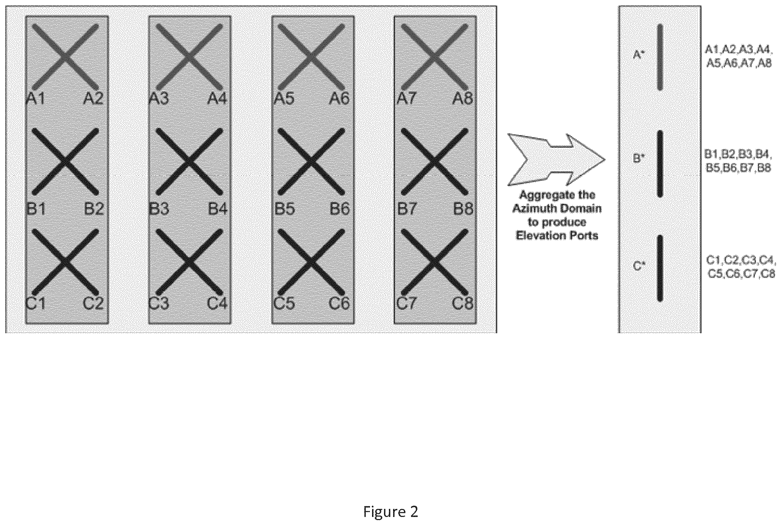

Figures 1 and 2 illustrate how a rectangular array can be conceptually visualized as a Kronecker-product of a set of azimuth ports, with +/-45° polarization, and a set of elevation ports.

Figure 1 illustrates a relationship between azimuth ports and number of columns in a rectangular array for an azimuth polarized representation. As shown in Figure 1, the number of azimuth ports in the Kronecker structure = 2* number of columns in the rectangular array.

Figure 2 illustrates a relationship between elevation ports and number of rows in the rectangular array for an azimuth polarized representation. As shown in Figure 2, the number of elevation ports in the Kronecker structure = number of rows in the rectangular array

As an example of an azimuth-polarized representation, for a cross-polarized rectangular array with a total of 40 antenna elements arranged in 10 rows and 2 columns, the dominant eigenvector v can be written in matrix form $V_{10,4}$ of dimensions 10 x 4.

A second representation is an elevation polarized representation. In this representation, the elevation ports comprising the Kronecker structure can be considered to be cross-polarized whereas the azimuth ports comprising the Kronecker structure can be considered to have a behavior that is averaged across the +/-45° polarizations.

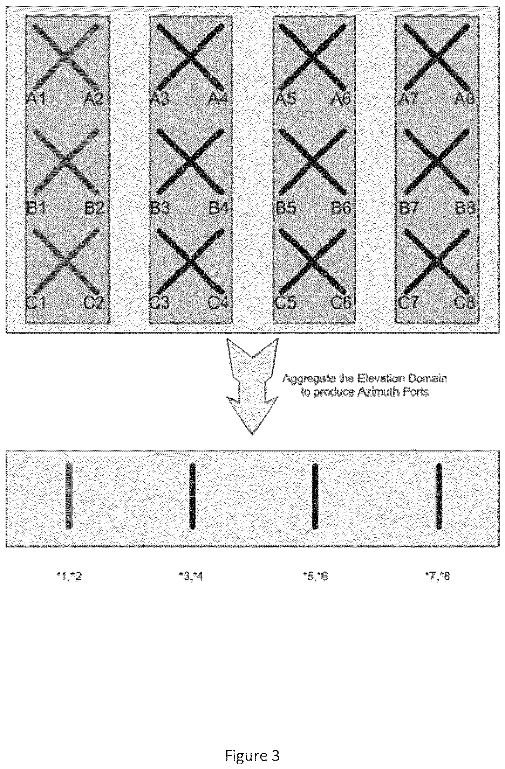

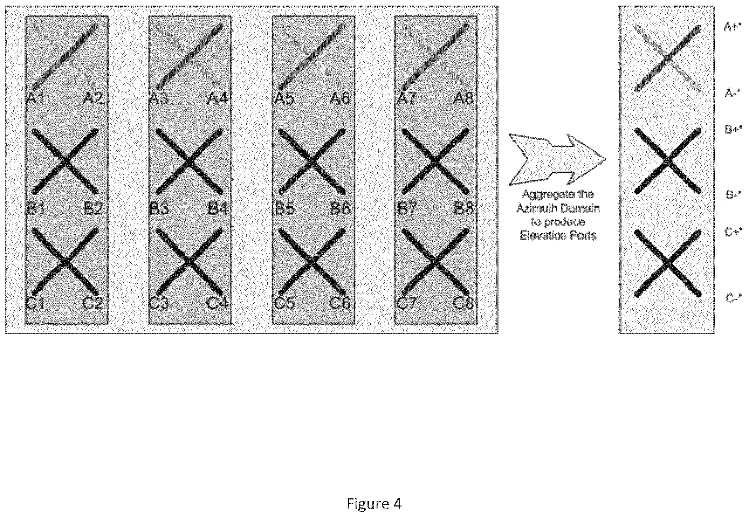

Figures 3 and 4 illustrate how a rectangular array can be conceptually visualized as a Kronecker-product of a set of elevation ports, with +/-45° polarization, and a set of azimuth ports.

Figure 3 illustrates a relationship between azimuth ports and number of columns in a rectangular array for an elevation polarized representation. As shown in Figure 3, the number of azimuth ports in the Kronecker structure = number of columns in the rectangular array.

Figure 4 illustrates a relationship between elevation ports and number of rows in the rectangular array for an elevation polarized representation. As shown in Figure 4, the number of elevation ports in the Kronecker structure = 2* number of rows in the rectangular array.

As an example of an elevation-polarized representation, for a cross-polarized rectangular array with a total of 40 antenna elements arranged in 10 rows and 2 columns, the dominant eigenvector v can be written in matrix form $V_{20,2}$ of dimensions 20 x 2.

Assuming a matrix representation V of the dominant eigenvector (for example $V_{10,4}$, $V_{20,2}$), a Kronecker approximation can be determined by the cost-function:

$$\min_{v_{az}, v_{el}} \|vec(V) - v_{az} \otimes v_{el}\|_F$$

where F indicates the Frobenius norm and $\otimes$ denotes the Kronecker product and the vec() operator turns a matrix into a column vector by stacking the columns on top of each other in succession. Note that vec(V) is the dominant eigenvector in the usual column vector form. An equivalent formulation is the following cost function:

$$\min_{v_{az}, v_{el}} \|V - v_{el} v_{az}^T\|_F$$

where the relationship $a \otimes b = vec(ba^H)$ has been leveraged for any column vectors a and b where $(.)^T$ indicates the transpose operator. As described in Van Loan et al., "Approximation with Kronecker Products," (1993), in this case the solution for $v_{az}$ and $v_{el}$ can be shown to be the conjugated right singular vector and the left singular vector of V, respectively. Furthermore, $(v_{az} \otimes v_{el})$ is the Kronecker structure transmit weight of dimension Mt x 1 for the dominant eigen-mode. From the equivalent formulation shown above, it can be seen that a rank-1 approximation to V is effectively being created by means of the outer product of $v_{el}$ and $v_{az}$. Also note that there are formulations that are substantially equivalent to the above equation. For example, an equivalent formulation would contain conjugation operations that would not change the cost function that is being minimized and would not change the solution in any substantial way.

In a second step, the Kronecker structure transmit weight of dimension Mt x 1 can be quantized for each dominant eigen-mode at the UE using scalar quantization.

The Kronecker-product approximation $(v_{az} \otimes v_{el})$ can reduce the dimensionality of the quantization space, as described above. As a further reduction, in certain embodiments only the phase of the component elements is retained from $(v_{az} \otimes v_{el})$.

Several methods can be used to quantize the phase of the elements of the Kronecker approximation including differential quantization. In the simulations quantizing the phase of each element of $v_{az}$ and $v_{el}$ is performed independently using a 16-PSK constellation. The quantized representation of the Kronecker approximation can be given by $(Q(v_{az}) \otimes Q(v_{el}))$ where Q(.) is a scalar quantization function.

The Kronecker-product approximation $(v_{az} \otimes v_{el})$ can be used not only for approximating an eigenvector of the channel, but also for approximating an arbitrary transmit weight vector that was computed by a methodology other than computing an eigenvector. In other words vec(V) may represent a hypothetical transmit weight corresponding to Mt ports. The same procedure as described above would be applied except the hypothetical Mtx1 transmit weight vector would be substituted for the eigenvector in the description above.

In a third step, the Kronecker product approximation can be reconstructed for each eigen-mode at the eNB. The eNB may assume that the quantized values are received error-free at the eNB. Moreover, the Kronecker approximation for the dominant eigen-mode can be reconstructed following $(Q^{-1}(Q(v_{az})) \otimes Q^{-1}(Q(v_{el})))$ where $Q^{-1}(.)$ is a inverse scalar quantization function associated with Q(.).

In the following simulation, a UE is assumed to be distributed uniformly within a cell with an allocated bandwidth of 1MHz, 1 LTE sub-band. The height of the UE is distributed between 1.5m and 22.5m, as per 3GPP agreement. The eNB is located at 10m height as in 3D-UMi scenario from 3GPP TR 36.873. A total of 40 Tx ports are assumed in a planar cross-polarized array, 10 rows in the vertical dimension and 2 columns in the horizontal dimension. The spacing of the array is 0.5 $\lambda$ in azimuth and 0.9 $\lambda$ in elevation.

It is assumed that the dominant eigenvector of the covariance matrix is the ideal rank-1 precoder and a matrix comprising of the 2-dominant eigenvectors of the covariance matrix is the ideal rank-2 precoder. All other quantization schemes are measured as a loss of signal to noise ratio (SNR) with reference to the ideal precoder.

In particular, as to 8b/9b/10b, VQ: a codebook of size 256/512/1024 is searched exhaustively to find the best rank-2 precoder. The codebook has a Kronecker structure with 4bits used in the azimuth dimension, a Rel-8 LTE 4Tx codebook, and 4/5/6bits used in the elevation dimension, a DFT codebook.

Furthermore, as to 52b/104b, SQ (16-PSK), an approach according to certain embodiments is used to represent each eigen-vector in a matrix form $V_{10,4}$ corresponding to an azimuth-polarized representation and then approximated by $v_{az} \otimes v_{el}$ where $v_{az}$ is a 4x1 and $v_{el}$ is a 10x1 vector. Then, only the phases of $(v_{az} \otimes v_{el})$ are retained and quantized using a 16-PSK constellation. Considering that an eigen-vector is invariant to multiplication by a scalar phase term, $(Q(v_{az} \otimes Q(v_{el}))$ can be represented using 13*4=52 bits. In the case of rank-2, the overhead is doubled to 104 bits. Then, the eigen-vectors are reconstructed at the eNB and directly used as precoders for rank-1 or rank-2 transmission.

Moreover, as to 84b/168b, SQ (16-PSK), the same method is used as in the case of 52b/104b, SQ (16-PSK) is followed but an elevation-polarized representation is used. Therefore an eigen-vector is represented in a matrix form as $V_{20,2}$ and approximated by $v_{az} \otimes v_{el}$ where $v_{az}$ is a 2x1 and $v_{el}$ is a 20x1 vector. Following a phase-only 16-PSK quantization, each eigenvector can be represented using 21*4=84 bits.

Additionally, as to Inf-b, const-mod, the method does not assume quantization, therefore infinite bits, or Kronecker approximation but only the phase components of the ideal precoder is retained. It shows the loss in restricting the precoder to be constant modulus.

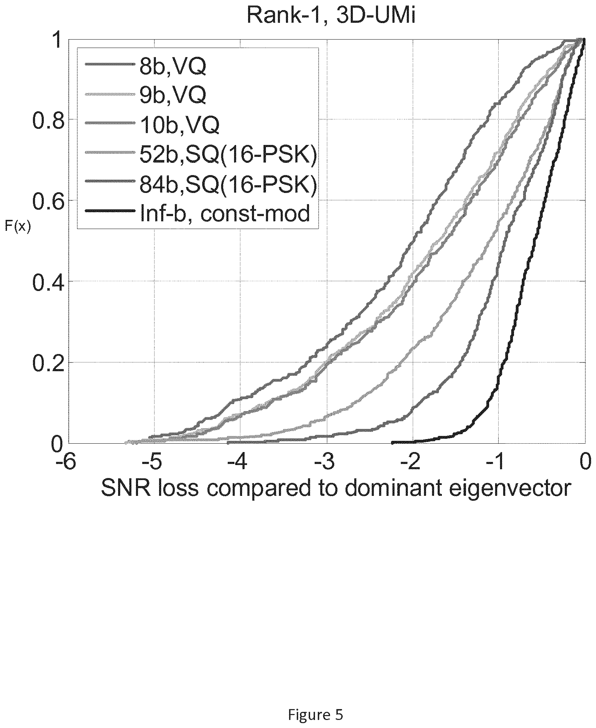

Figure 5 plots the loss in rank-1 SNR assuming a MRC receiver. Thus, Figure 5 illustrates SNR loss for different quantization schemes (rank-1).

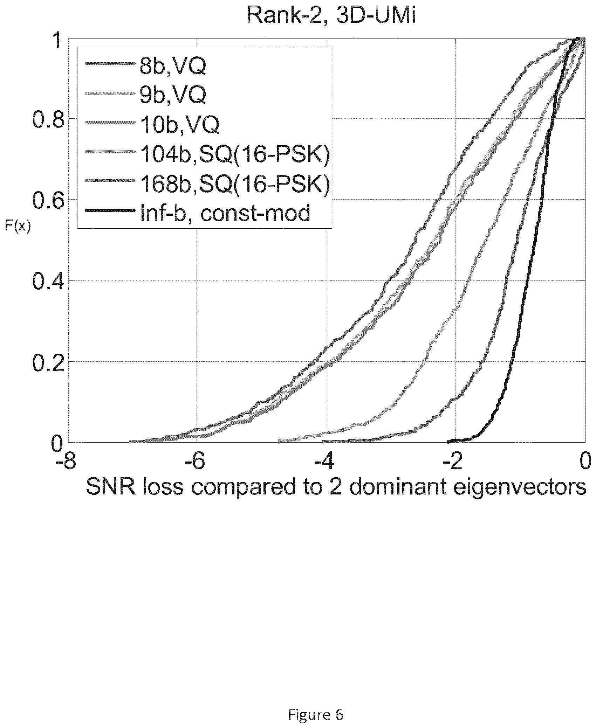

Figure 6 plots the loss in per-stream SNR for rank-2 assuming a MMSE receiver. Thus, Figure 6 illustrates SNR loss for different quantization schemes (rank-2).

As can be seen from Figures 5 and 6, the performance of the conventional VQ approach gets saturated at around 10bits. Further increasing the size may also have serious search-complexity concerns. Currently a maximum size of 8bits is considered in LTE. Certain embodiments provide a method to increase the fidelity of implicit feedback significantly with no computational concerns if more bits can be utilized, in the range of 1-4 bits/port.

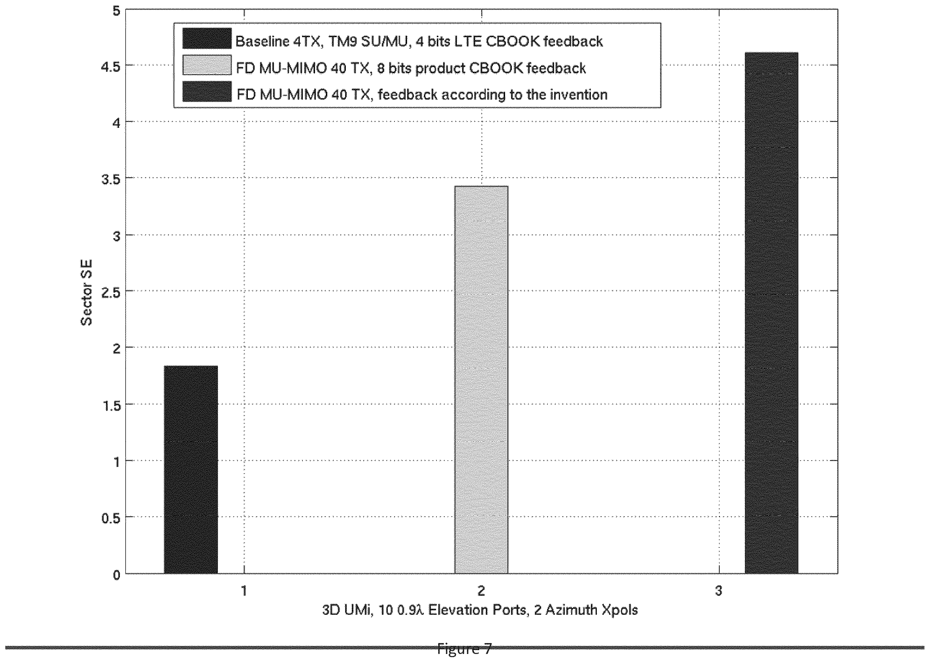

Figure 7 illustrates the system-level performance of a scheme according to certain embodiments. Thus, Figure 7 illustrates cell-avg SE performance of a scheme following certain embodiments compared to a conventional 8-bit codebook.

In the simulation for Figure 7, the propagation environment and UE distribution is according to the 3D-UMi scenario from 3GPP TR 36.873. A uniform rectangular cross-polarized array with 40 antenna elements, 10 rows and 2 columns, spaced $0.5\lambda$ apart horizontally and $0.9\lambda$ apart vertically is used. For the baseline 4Tx TM9 case the antenna elements in the vertical dimension are aggregated into a beam pointed at 12° downtilt with 10° half-power beam-width. The scheme simulated uses 48 bits for quantizing a rank-1 constant modulus beamforming vector and sends it back with a 10ms periodicity. Figure 7 shows a 35% gain in cell throughput by improving the fidelity of the CSI feedback from 8 bits to 48 bits (rank-1).

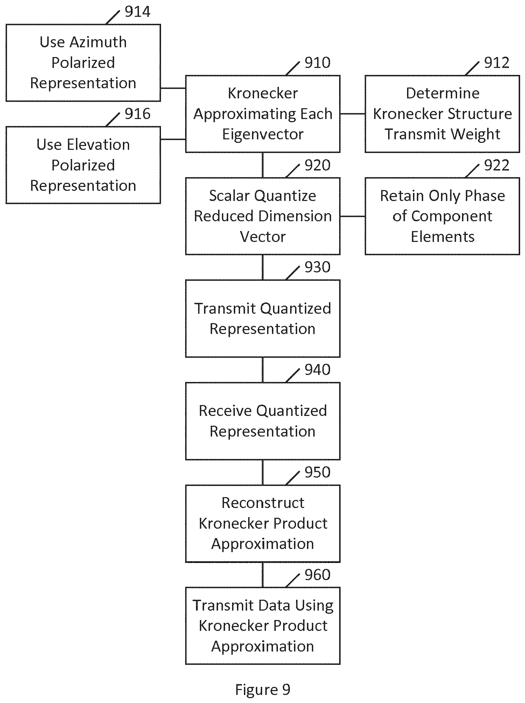

Figure 9 illustrates a method according to certain embodiments. As shown in Figure 9, a method can include, at 910, approximating, using a Kronecker approximation, an eigenvector for a channel of a user equipment via a least-squares approach to produce a reduced-dimension vector 1 and a reduced-dimension vector 2. The user equipment can be an example of a first node.

The approximating can include, at 912, determining a Kronecker structure transmit weight of dimension Mt x 1 for a dominant eigen-mode at the UE. Mt can refer to the total number of antenna ports in a two-dimensional array of a base station.

The approximating can, for example, include determining a Kronecker-product approximation $(v_{az} \otimes v_{el})$, where $v_{az}$ corresponds to a set of azimuth ports and $v_{el}$ corresponds to a set of elevation ports.

The approximating can involve, at 914, using an azimuth polarized representation of each eigenvector or, at 916, using an elevation polarized representation of each eigenvector.

The method can also include, at 920, quantizing the reduced-dimension vector using scalar quantization to produce a quantized representation. The quantizing comprises quantizing $v_{az}$, $v_{el}$ that constitutes the Kronecker structure transmit weight of dimension Mt x 1 for each dominant eigen-mode at the UE using scalar quantization. The quantizing can include, at 922, retaining only the phase of the component elements from $(v_{az} \otimes v_{el})$. The quantized representation of the Kronecker approximation can be given by $(Q(v_{az}) \otimes Q(v_{el}))$.

The method can additionally include, at 930, transmitting the quantized representation from a UE to a base station, such as an eNB. The base station can be an example of a second node. Alternatively, the first node and second node can be swapped, such that the approximating is done regarding a base station and transmitted to the base station.

The method can further include, at 940, receiving the quantized representation at the base station. For example, the method can include receiving a scalar quantization of one or more reduced-dimension vector that approximates an eigenvector using Kronecker approximation corresponding to a channel for a user equipment or other first node.

The method can additionally include, at 950, reconstructing the Kronecker product approximation for an eigen-mode at the eNB or other second node. The reconstructing can include reconstructing the Kronecker approximation for the dominant eigen-mode following $(Q^{-1}(Q(v_{az})) \otimes Q^{-1}(Q(v_{el})))$. The method can also include, at 960, transmitting data, for example to the user equipment, using the Kronecker product approximation.

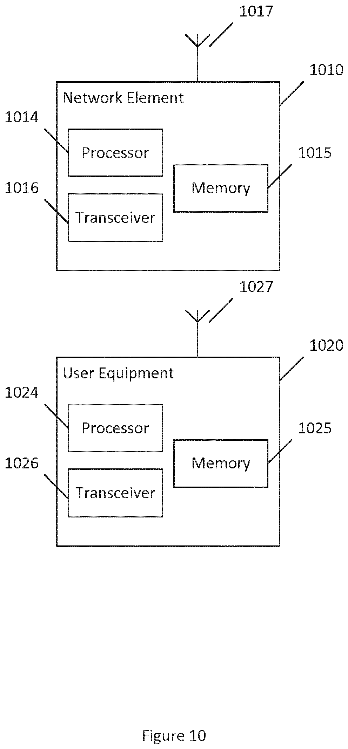

Figure 10 illustrates a system according to certain embodiments of the invention. It should be understood that each block of the flowchart of Figure 9 may be implemented by various means or their combinations, such as hardware, software, firmware, one or more processors and/or circuitry. In one embodiment, a system may include several devices, such as, for example, network element 1010 and user equipment (UE) or user device 1020. The system may include more than one UE 1020 and more than one network element 1010, although only one of each is shown for the purposes of illustration. A network element can be an access point, a base station, an eNode B (eNB), or any of the other network elements discussed herein. Each of these devices may include at least one processor or control unit or module, respectively indicated as 1014 and 1024. At least one memory may be provided in each device, and indicated as 1015 and 1025, respectively. The memory may include computer program instructions or computer code contained therein. One or more transceiver 1016 and 1026 may be provided, and each device may also include an antenna, respectively illustrated as 1017 and 1027. Although only one antenna each is shown, many antennas and multiple antenna elements may be provided to each of the devices. For example, a two-dimensional array of antenna elements may be used by network element 1010. Other configurations of these devices, for example, may be provided. For example, network element 1010 and UE 1020 may be additionally configured for wired communication, in addition to wireless communication, and in such a case antennas 1017 and 1027 may illustrate any form of communication hardware, without being limited to merely an antenna.

Transceivers 1016 and 1026 may each, independently, be a transmitter, a receiver, or both a transmitter and a receiver, or a unit or device that may be configured both for transmission and reception. The transmitter and/or receiver (as far as radio parts are concerned) may also be implemented as a remote radio head which is not located in the device itself, but in a mast, for example. It should also be appreciated that according to the "liquid" or flexible radio concept, the operations and functionalities may be performed in different entities, such as nodes, hosts or servers, in a flexible manner. In other words, division of labor may vary case by case. One possible use is to make a network element to deliver local content. One or more functionalities may also be implemented as a virtual application that is as software that can run on a server.

A user device or user equipment 1020 may be a mobile station (MS) such as a mobile phone or smart phone or multimedia device, a computer, such as a tablet, provided with wireless communication capabilities, personal data or digital assistant (PDA) provided with wireless communication capabilities, portable media player, digital camera, pocket video camera, navigation unit provided with wireless communication capabilities or any combinations thereof. The user device or user equipment 1020 may be a sensor or smart meter, or other device that may usually be configured for a single location.

In an exemplifying embodiment, an apparatus, such as a node or user device, may include means for carrying out embodiments described above in relation to Figure 9.

Processors 1014 and 1024 may be embodied by any computational or data processing device, such as a central processing unit (CPU), digital signal processor (DSP), application specific integrated circuit (ASIC), programmable logic devices (PLDs), field programmable gate arrays (FPGAs), digitally enhanced circuits, or comparable device or a combination thereof. The processors may be implemented as a single controller, or a plurality of controllers or processors. Additionally, the processors may be implemented as a pool of processors in a local configuration, in a cloud configuration, or in a combination thereof.

For firmware or software, the implementation may include modules or unit of at least one chip set (e.g., procedures, functions, and so on). Memories 1015 and 1025 may independently be any suitable storage device, such as a non-transitory computer-readable medium. A hard disk drive (HDD), random access memory (RAM), flash memory, or other suitable memory may be used. The memories may be combined on a single integrated circuit as the processor, or may be separate therefrom. Furthermore, the computer program instructions may be stored in the memory and which may be processed by the processors can be any suitable form of computer program code, for example, a compiled or interpreted computer program written in any suitable programming language. The memory or data storage entity is typically internal but may also be external or a combination thereof, such as in the case when additional memory capacity is obtained from a service provider. The memory may be fixed or removable.

The memory and the computer program instructions may be configured, with the processor for the particular device, to cause a hardware apparatus such as network element 1010 and/or UE 1020, to perform any of the processes described above (see, for example, Figure 9). Therefore, in certain embodiments, a non-transitory computer-readable medium may be encoded with computer instructions or one or more computer program (such as added or updated software routine, applet or macro) that, when executed in hardware, may perform a process such as one of the processes described herein. Computer programs may be coded by a programming language, which may be a high-level programming language, such as objective-C, C, C++, C#, Java, etc., or a low-level programming language, such as a machine language, or assembler. Alternatively, certain embodiments of the invention may be performed entirely in hardware.

Furthermore, although Figure 10 illustrates a system including a network element 1010 and a UE 1020, embodiments of the invention may be applicable to other configurations, and configurations involving additional elements, as illustrated and discussed herein. For example, multiple user equipment devices and multiple network elements may be present, or other nodes providing similar functionality, such as nodes that combine the functionality of a user equipment and an access point, such as a relay node.

One having ordinary skill in the art will readily understand that the invention as discussed above may be practiced with steps in a different order, and/or with hardware elements in configurations which are different than those which are disclosed. Therefore, although the invention has been described based upon these preferred embodiments, it would be apparent to those of skill in the art that certain modifications, variations, and alternative constructions would be apparent, while remaining within the scope of the invention. In order to determine the metes and bounds of the invention, therefore, reference should be made to the appended claims.

**Claims**

1. A method, comprising:

    approximating, using a Kronecker approximation, a transmit weight vector of a set of transmit weight vectors for a channel of a first node via a least-squares approach to produce a reduced-dimension vector 1 and a reduced-dimension vector 2;
    quantizing at least one of reduced dimension vector 1 and reduced-dimension vector 2 using scalar quantization to produce a quantized representation; and
    transmitting the quantized representation to a second node.

2. The method of claim 1, wherein the transmit weight vector of the set of transmit weight vectors comprises an eigenvector of a set of eigenvectors.

3. The method of claim 1 or claim 2, wherein the first node comprises a user equipment and a second node comprises a base station or wherein the first node comprises a base station and the second node comprises a user equipment.

4. The method of any of claims 1-3, wherein the approximation comprises determining a Kronecker structure transmit weight of dimension Mt x 1 for a dominant eigen-mode at the user equipment, wherein Mt is the total number of antenna ports in a two-dimensional array of a base station.

5. The method of any of claims 1-4, wherein the channel of the user equipment comprises a matrix that represents a propagation environment associated with a two-dimensional array of transmit antenna ports and a set of receive antenna ports as measured using reference signals via channel estimation.

6. The method of any of claims 1-5, wherein the quantizing comprises quantizing the one or more reduced-dimension vectors used to construct a Kronecker structure transmit weight of dimension Mt x 1 for a dominant eigen-mode at the user equipment using scalar quantization, wherein Mt is the total number of antenna ports in a two-dimensional array of a base station.

7. The method of any of claims 1-6, wherein the approximation comprises determining a Kronecker-product approximation $(v_{az} \otimes v_{el})$, where $v_{az}$ corresponds to a set of weights associated with azimuth ports and $v_{el}$ corresponds to a set of weights associated with elevation ports.

8. The method of claim 7, wherein the quantizing comprises retaining only the phase of the component elements from $(v_{az} \otimes v_{el})$, where $v_{az}$ corresponds to a set of weights associated with azimuth ports and $v_{el}$ corresponds to a set of weights associated with elevation ports.

9. The method of claim 7 or claim 8, wherein the quantized representation of the Kronecker approximation is given by $(Q(v_{az}) \otimes Q(v_{el}))$, where $v_{az}$ corresponds to a set of weights associated with azimuth ports and $v_{el}$ corresponds to a set of weights associated with elevation ports and $Q$ is a quantization function.

10. The method of any of claims 1-9, wherein the approximating comprises using one of an azimuth polarized representation of each transmit weight vector, or an elevation polarized representation of each transmit weight vector.

11. A method, comprising:

    receiving a scalar quantized representation of one or more reduced-dimension vectors that comprises an approximation of a transmit weight vector using Kronecker approximation corresponding to a channel for a transmitter; and
    transmitting data using a Kronecker product approximation based on the scalar quantized representation.

12. The method of claim 11, wherein the transmit weight vector comprises an eigenvector.

13. The method of claim 11 or claim 12, further comprising:
    reconstructing the Kronecker product approximation for an eigen-mode at a base station.

14. The method of claim 13, wherein the reconstructing comprises reconstructing the Kronecker approximation for the dominant eigen-mode following

$(Q^{-1}(Q(v_{az}))\otimes Q^{-1}(Q(v_{el})))$, where $v_{az}$ corresponds to a set of weights associated with azimuth ports and $v_{el}$ corresponds to a set of weights associated with elevation ports, Q is a quantization function, and $Q^{-1}$ is an inverse quantization function.

15. An apparatus comprising means for performing method according to any of claims 1-10, or any of claims 11-14.

**Patentansprüche**

1. Verfahren, das Folgendes umfasst:

   Approximieren unter Verwendung einer Kronecker-Approximation eines Übertragungsgewichtungsvektors eines Satzes von Übertragungsgewichtungsvektoren für einen Kanal eines ersten Knotens via einen Kleinstquadratansatz, um einen Vektor 1 mit reduzierten Dimensionen und einen Vektor 2 mit reduzierten Dimensionen zu produzieren;
   Quantisieren von mindestens einem von Vektor 1 mit reduzierten Dimensionen und Vektor 2 mit reduzierten Dimensionen unter Verwendung einer Skalarquantisierung, um eine quantisierte Repräsentation zu produzieren; und
   Übertragen der quantisierten Repräsentation zu einem zweiten Knoten.

2. Verfahren nach Anspruch 1, wobei der Übertragungsgewichtungsvektor des Satzes von Übertragungsgewichtungsvektoren einen Eigenvektor eines Satzes von Eigenvektoren umfasst.

3. Verfahren nach Anspruch 1 oder 2, wobei der erste Knoten eine Teilnehmereinrichtung umfasst und ein zweiter Knoten eine Basisstation umfasst oder wobei der erste Knoten eine Basisstation umfasst und der zweite Knoten eine Teilnehmereinrichtung umfasst.

4. Verfahren nach einem der Ansprüche 1-3, wobei die Approximation das Bestimmen einer Übertragungsgewichtung mit Kronecker-Struktur einer Dimension Mt x 1 für einen dominanten Eigenmodus an der Teilnehmereinrichtung umfasst, wobei Mt die Gesamtzahl von Antennenanschlüssen in einem zweidimensionalen Array einer Basisstation ist.

5. Verfahren nach einem der Ansprüche 1-4, wobei der Kanal der Teilnehmereinrichtung eine Matrix umfasst, die eine Ausbreitungsumgebung repräsentiert, die mit einem zweidimensionalen Array von Sendeantennenanschlüssen und einem Satz von Empfangsantennenanschlüssen, wie unter Verwendung von Referenzsignalen via Kanalschätzung gemessen, verknüpft ist.

6. Verfahren nach einem der Ansprüche 1-5, wobei das Quantisieren das Quantisieren des einen oder der mehreren Vektoren mit reduzierten Dimensionen umfasst, die verwendet werden, um unter Verwendung einer Skalarquantisierung eine Übertragungsgewichtung mit Kronecker-Struktur einer Dimension Mt x 1 für einen dominanten Eigenmodus an der Teilnehmereinrichtung zu konstruieren, wobei Mt die Gesamtzahl von Antennenanschlüssen in einem zweidimensionalen Array einer Basisstation ist.

7. Verfahren nach einem der Ansprüche 1-6, wobei die Approximation das Bestimmen einer Kronecker-Produktapproximation $(v_{az}\otimes v_{el})$ umfasst, wo $v_{az}$ einem Satz von Gewichtungen entspricht, die mit Azimutanschlüssen verknüpft sind, und $v_{el}$ einem Satz von Gewichtungen entspricht, die mit Elevationsanschlüssen verknüpft sind.

8. Verfahren nach Anspruch 7, wobei das Quantisieren das Behalten nur der Phase der Komponentenelemente von $(v_{az}\otimes v_{el})$ umfasst, wo $v_{az}$ einem Satz von Gewichtungen entspricht, die mit Azimutanschlüssen verknüpft sind, und $v_{el}$ einem Satz von Gewichtungen entspricht, die mit Elevationsanschlüssen verknüpft sind.

9. Verfahren nach Anspruch 7 oder 8, wobei die quantisierte Repräsentation der Kronecker-Approximation durch $(Q(v_{az})\otimes Q(v_{el}))$ gegeben ist, wo $v_{az}$ einem Satz von Gewichtungen entspricht, die mit Azimutanschlüssen verknüpft sind, und $v_{el}$ einem Satz von Gewichtungen entspricht, die mit Elevationsanschlüssen verknüpft sind, und Q eine Quantisierungsfunktion ist.

10. Verfahren nach einem der Ansprüche 1-9, wobei das Approximieren das Verwenden einer azimutpolarisierten Repräsentation jedes Übertragungsgewichtungsvektors oder einer elevationspolarisierten Repräsentation jedes Übertragungsgewichtungsvektors umfasst.

11. Verfahren, das Folgendes umfasst:

   Empfangen einer skalarquantisierten Repräsentation von einem oder mehreren Vektoren mit reduzierten Dimensionen, die eine Approximation eines Übertragungsgewichtungsvektors unter Verwendung einer Kronecker-Approximation, die einem Kanal für einen Sender entspricht, umfasst; und
   Übertragen von Daten unter Verwendung einer Kronecker-Produktapproximation auf Basis der skalarquantisierten Repräsentation.

**12.** Verfahren nach Anspruch 11, wobei der Übertragungsgewichtungsvektor einen Eigenvektor umfasst.

**13.** Verfahren nach Anspruch 11 oder 12, das ferner Folgendes umfasst:
Rekonstruieren der Kronecker-Produktapproximation für einen Eigenmodus an einer Basisstation.

**14.** Verfahren nach Anspruch 13, wobei das Rekonstruieren das Rekonstruieren der Kronecker-Approximation für den dominanten Eigenmodus $(Q^{-1}(Q(v_{az})) \otimes Q^{-1}(Q(v_{el})))$ folgend umfasst, wo $v_{az}$ einem Satz von Gewichtungen entspricht, die mit Azimutanschlüssen verknüpft sind, und $v_{el}$ einem Satz von Gewichtungen entspricht, die mit Elevationsanschlüssen verknüpft sind, $Q$ eine Quantisierungsfunktion ist und $Q^{-1}$ eine inverse Quantisierungsfunktion ist.

**15.** Vorrichtung, die Mittel zum Durchführen eines Verfahrens nach einem der Ansprüche 1-10 oder einem der Ansprüche 11-14 umfasst.

## Revendications

**1.** Procédé comprenant :

l'approximation, à l'aide d'une approximation de Kronecker, d'un vecteur de pondération de transmission d'un ensemble de vecteurs de pondération de transmission pour un canal d'un premier noeud par le biais d'une approche des moindres carrés pour produire un vecteur de dimension réduite 1 et un vecteur de dimension réduite 2 ;
la quantification du vecteur de dimension réduite 1 et/ou du vecteur de dimension réduite 2 à l'aide d'une quantification scalaire pour produire une représentation quantifiée ; et
la transmission de la représentation quantifiée à un second noeud.

**2.** Procédé selon la revendication 1, dans lequel le vecteur de pondération de transmission de l'ensemble de vecteurs de pondération de transmission comprend un vecteur propre d'un ensemble de vecteurs propres.

**3.** Procédé selon la revendication 2, dans lequel le premier noeud comprend un équipement utilisateur et un second noeud comprend une station de base ou dans lequel le premier noeud comprend une station de base et le second noeud comprend un équipement utilisateur.

**4.** Procédé selon l'une quelconque des revendications 1 à 3, dans lequel l'approximation comprend la détermination d'une pondération de transmission de structure de Kronecker de dimensions Mt x 1 pour un mode propre dominant au niveau de l'équipement utilisateur, dans lequel Mt est le nombre total de ports d'antenne dans un réseau bidimensionnel d'une station de base.

**5.** Procédé selon l'une quelconque des revendications 1 à 4, dans lequel le canal de l'équipement utilisateur comprend une matrice qui représente un environnement de propagation associé à un réseau bidimensionnel de ports d'antenne de transmission et un ensemble de ports d'antenne de réception tels que mesurés à l'aide de signaux de référence par le biais d'une estimation de canal.

**6.** Procédé selon l'une quelconque des revendications 1 à 5, dans lequel la quantification comprend la quantification d'un ou de plusieurs vecteurs de dimension réduite utilisés pour construire une pondération de transmission de structure de Kronecker de dimensions Mt x 1 pour un mode propre dominant au niveau de l'équipement utilisateur, à l'aide d'une quantification scalaire, dans lequel Mt est le nombre total de ports d'antenne dans un réseau bidimensionnel d'une station de base.

**7.** Procédé selon l'une quelconque des revendications 1 à 6, dans lequel l'approximation comprend la détermination d'une approximation de produit de Kronecker $(v_{az} \otimes v_{el})$, où $v_{az}$ correspond à un ensemble de pondérations associées à des ports d'azimut et $v_{el}$ correspond à un ensemble de pondérations associées à des ports d'élévation.

**8.** Procédé selon la revendication 7, dans lequel la quantification comprend la retenue seulement de la phase des éléments de composant à partir $(v_{az} \otimes v_{el})$, où $v_{az}$ correspond à un ensemble de pondérations associées à des ports d'azimut et $v_{el}$ correspond à un ensemble de pondérations associées à des ports d'élévation.

**9.** Procédé selon la revendication 7 ou la revendication 8, dans lequel la représentation quantifiée de l'approximation de Kronecker est donnée par $(Q(v_{az}) \otimes Q(v_{el}))$, où $v_{az}$ correspond à un ensemble de pondérations associées à des ports d'azimut et $v_{el}$ correspond à un ensemble de pondérations associées à des ports d'élévation et $Q$ est une fonction de quantification.

**10.** Procédé selon l'une quelconque des revendications 1 à 9, dans lequel l'approximation comprend l'utilisation soit d'une représentation polarisée d'azimut de chaque vecteur de pondération de transmission, soit une représentation polarisée d'élévation de chaque vecteur de pondération de transmission.

11. Procédé comprenant :

la réception d'une représentation quantifiée scalaire d'un ou de plusieurs vecteurs de dimension réduite qui comprend une approximation d'un vecteur de pondération de transmission à l'aide d'une approximation de Kronecker correspondant à un canal pour un émetteur ; et la transmission de données à l'aide d'une approximation de produit de Kronecker basée sur la représentation quantifiée scalaire.

12. Procédé selon la revendication 11, dans lequel le vecteur de pondération de transmission comprend un vecteur propre.

13. Procédé selon la revendication 11 ou la revendication 12, comprenant en outre :
la reconstruction de l'approximation de produit de Kronecker pour un mode propre au niveau d'une station de base.

14. Procédé selon la revendication 13, dans lequel la reconstruction comprend la reconstruction de l'approximation de Kronecker pour le mode propre dominant suite à
$(Q^{-1}(Q(v_{az})) \otimes Q^{-1}(Q(v_{\theta l})))$, où $v_{az}$ correspond à un ensemble de pondérations associées à des ports d'azimut et $v_{\theta l}$ correspond à un ensemble de pondérations associées à des ports d'élévation et $Q$ est une fonction de quantification et $Q^{-1}$ est une fonction de quantification inverse.

15. Appareil comprenant des moyens pour réaliser le procédé selon l'une quelconque des revendications 1 à 10 ou selon l'une quelconque des revendications 11 à 14.

Figure 1

Figure 2

Figure 3

Figure 4

Figure 5

Rank-2, 3D-UMi

Figure 6

Figure 7

Figure 8

```
                           ┌─────────────── 914
                           │
              ┌────────────────────────┐
              │      Use Azimuth        │
              │       Polarized         │         ┌──────── 910              ┌──────── 912
              │    Representation       │         │                          │
              └────────────────────────┘  ┌────────────────────┐   ┌────────────────────────┐
                           ┌────── 916     │      Kronecker     │   │       Determine         │
                           │               │ Approximating Each │───│  Kronecker Structure    │
              ┌────────────────────────┐   │    Eigenvector     │   │    Transmit Weight      │
              │     Use Elevation       │──└────────────────────┘   └────────────────────────┘
              │       Polarized         │         │
              │    Representation       │         │        ┌──────── 920              ┌──────── 922
              └────────────────────────┘   ┌────────────────────┐   ┌────────────────────────┐
                                           │   Scalar Quantize  │   │   Retain Only Phase     │
                                           │  Reduced Dimension │───│   of Component          │
                                           │      Vector        │   │     Elements            │
                                           └────────────────────┘   └────────────────────────┘
                                                    │        ┌──────── 930
                                           ┌────────────────────┐
                                           │ Transmit Quantized │
                                           │   Representation   │
                                           └────────────────────┘
                                                    │        ┌──────── 940
                                           ┌────────────────────┐
                                           │  Receive Quantized │
                                           │   Representation   │
                                           └────────────────────┘
                                                    │        ┌──────── 950
                                           ┌────────────────────┐
                                           │     Reconstruct    │
                                           │ Kronecker Product  │
                                           │   Approximation    │
                                           └────────────────────┘
                                                    │        ┌──────── 960
                                           ┌────────────────────┐
                                           │ Transmit Data Using│
                                           │ Kronecker Product  │
                                           │   Approximation    │
                                           └────────────────────┘
```

Figure 9

1017

1010

Network Element

1014

Processor

1015

Memory

1016

Transceiver

1027

1020

User Equipment

1024

Processor

1025

Memory

1026

Transceiver

Figure 10

**REFERENCES CITED IN THE DESCRIPTION**

**Patent documents cited in the description**

- US 2014029684 A1


**Non-patent literature cited in the description**

- **VAN LOAN et al.** *Approximation with Kronecker Products,* 1993